# EUROPEAN PATENT APPLICATION

(11) **EP 4 431 543 A1**
(43) Date of publication of application: **18.09.2024**
(21) Application number: 22893225.7
(22) Date of filing: 10.11.2022
(51) Int. Cl.: C08G 63/91, C08G 63/664, C08G 63/672, C08G 63/08, C08G 63/16, C08L 67/04, C08J 5/18

(54) **POLYLACTIC ACID RESIN, POLYLACTIC ACID RESIN COMPOSITION, POLYLACTIC ACID RESIN FILM, AND MOLDED ARTICLE**

(30) Priority: 10.11.2021 KR 20210154084; 04.11.2022 KR 20220145878
(71) Applicant: SK Chemicals Co., Ltd., Seongnam-si, Gyeonggi-do 13494 (KR)
(72) Inventor: HAN, YE-Ji, Seongnam-si, Gyeonggi-do 13494 (KR); YOO, Young-Man, Seongnam-si, Gyeonggi-do 13494 (KR); HWANG, Jeoung-Jun, Seongnam-si, Gyeonggi-do 13494 (KR)
(74) Representative: Dehns
(86) International application number: PCT/KR2022/017653
(87) International publication number: WO 2023/085806

(57) **Abstract**

The present invention relates to a polylactic acid resin, a polylactic acid resin composition, a polylactic acid resin film, and a molded article, wherein the inclusion of soft segments containing 0.5 wt% or more of at least one repeating unit selected from the group consisting of a polyester-based polyol repeating unit, a polylactone-based polyol repeating unit, and a polycarbonate-based polyol repeating unit can lead to improvements in flexibility, transparency, tearing strength, processability, and the like while also providing excellent biodegradability.

## Description

### Technical Field

The present invention relates to a polylactic acid resin, a polylactic acid resin composition, and a film and molded article comprising the same.

### Background Art

Petroleum-based resins such as polyethylene terephthalate (PET), nylon, polyolefin, and soft polyvinyl chloride (PVC) are still widely used as materials for various purposes such as packaging materials. However, these petroleum-based resins do not have biodegradability, so that they emit a large amount of carbon dioxide, which is a global warming gas, when discarded, thereby causing environmental pollution. In addition, as petroleum resources are gradually depleted, the use of polylactic acid resins having biodegradability has been widely studied in recent years.

However, polylactic acid resins may generally have lower mechanical properties such as flexibility and hardness as compared with other petroleum-based resins. Thus, research is being conducted to enhance the mechanical properties of resins by forming polylactic acid copolymers by applying a polyol to polylactic acid. For example, Korean Laid-open Patent Publication No. 2013-0135758 discloses a method for improving the flexibility of a polylactic acid copolymer resin by applying a polyurethane polyol as one monomer of the polylactic acid copolymer.

In such an event, if an ether polyol compound is used, flexibility and mechanical properties may be enhanced, whereas biodegradability may be deteriorated. On the other hand, if a polyester-based or carbonate-based polyol is used, the resin may have excellent biodegradability, whereas its mechanical properties such as tear strength may be deteriorated.

Accordingly, there is a need for research and development of polylactic acid resins with enhanced biodegradability, flexibility, and mechanical properties together.

### [Prior Art Document]

### [Patent Document]

(Patent Document 1) Korean Laid-open Patent Publication No. 2013-0135758

### Detailed Description of the Invention

### Technical Problem

The embodiments of the present invention provide a polylactic acid resin capable of having enhanced biodegradability, processability, transparency, and mechanical properties at the same time.

The embodiments of the present invention provide a polylactic acid resin film and molded article having excellent biodegradability, processability, transparency, and mechanical properties.

### Solution to the Problem

In an embodiment, there is provided a polylactic acid resin, which comprises a hard segment comprising a polylactic acid repeat unit represented by the following Formula 1; and a soft segment comprising a polyurethane polyol repeat unit in which a polyether polyol repeat unit represented by the following Formula 2 is linearly connected via a urethane bond with at least one repeat unit selected from the group consisting of a polyester-based polyol repeat unit represented by the following Formula 3, a polylactone-based polyol repeat unit represented by the following Formula 4, and a polycarbonate-based polyol repeat unit represented by the following Formula 5, wherein the soft segment comprises 0.5% by weight or more of at least one repeat unit selected from the group consisting of the polyester-based polyol repeat unit, the polylactone-based polyol repeat unit, and the polycarbonate-based polyol repeat unit based on the total weight of the polyether polyol repeat unit, the polyester-based polyol repeat unit, the polylactone-based polyol repeat unit, and the polycarbonate-based polyol repeat unit.

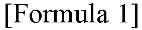

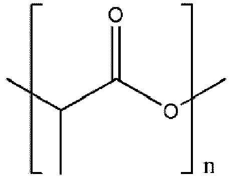

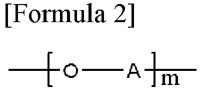

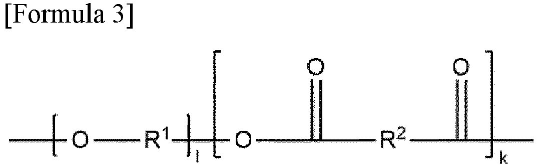

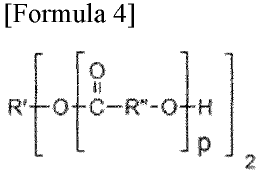

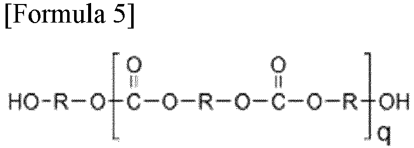

In Formula 1, n is an integer of 700 to 5,000;
in Formula 2, A is an alkylene group having 2 to 4 carbon atoms in the main chain and having 2 to 6 carbon atoms in total, and m is an integer of 10 to 100;
in Formula 3, R¹ is a linear or branched alkylene group having 2 to 5 carbon atoms, R² is a linear or branched alkylene group having 2 to 5 carbon atoms or an arylene group having 6 to 18 carbon atoms, 1 is an integer of 10 to 100, and k is an integer of 10 to 50;
in Formula 4, R' is a linear or branched alkylene group having 2 to 5 carbon atoms, R" is a linear or branched alkylene group having 1 to 5 carbon atoms, and p is an integer of 2 to 20; and
in Formula 5, R is a linear alkylene group having 2 to 5 carbon atoms, and q is an integer of 1 to 25.

In another embodiment, there is provided a process for preparing a polylactic acid resin, which comprises reacting a polyether polyol; at least one selected from the group consisting of a polyester-based polyol, a polylactone-based polyol, and a polycarbonate-based polyol; and a linear aliphatic diisocyanate compound to form a soft segment; and reacting the soft segment with lactide to connecting a hard segment comprising a polylactic acid repeat unit with the soft segment.

In still another embodiment, there is provided a molded article comprising the polylactic acid resin.

In still another embodiment, there is provided a polylactic acid resin film comprising the polylactic acid resin.

### Advantageous Effects of the Invention

The polylactic acid resin according to the embodiments comprises a soft segment comprising 0.5% by weight or more of at least one repeat unit selected from the group consisting of a polyester-based polyol repeat unit, a polylactone-based polyol repeat unit, and a polycarbonate-based polyol repeat unit, whereby it can have excellent biodegradability, its production costs can be reduced, the processability and flexibility can be enhanced, and the tear strength and transparency of a polylactic acid resin film and molded article can be enhanced.

### Best Mode for Carrying out the Invention

Hereinafter, the present invention will be described in detail with reference to embodiments.

In the following description of the embodiments, in the case where an element is mentioned to be formed "on" or "under" another element, it means not only that one element is directly formed "on" or "under" another element, but also that one element is indirectly formed on or under another element with other element(s) interposed between them.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

In the present specification, a singular expression is understood to encompass a singular or plural expression, interpreted in context, unless otherwise specified.

### Polylactic acid resin

According to an embodiment, there is provided a polylactic acid resin, which comprises a hard segment comprising a polylactic acid repeat unit represented by the following Formula 1; and a soft segment comprising a polyurethane polyol repeat unit in which a polyether polyol repeat unit represented by the following Formula 2 is linearly connected via a urethane bond with at least one repeat unit selected from the group consisting of a polyester-based polyol repeat unit represented by the following Formula 3, a polylactone-based polyol repeat unit represented by the following Formula 4, and a polycarbonate-based polyol repeat unit represented by the following Formula 5, wherein the soft segment comprises 0.5% by weight or more of at least one repeat unit selected from the group consisting of the polyester-based polyol repeat unit, the polylactone-based polyol repeat unit, and the polycarbonate-based polyol repeat unit based on the total weight of the polyether polyol repeat unit, the polyester-based polyol repeat unit, the polylactone-based polyol repeat unit, and the polycarbonate-based polyol repeat unit.

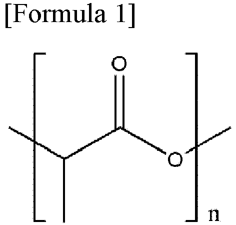

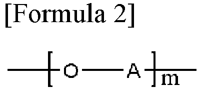

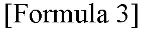

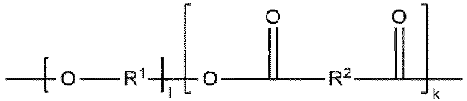

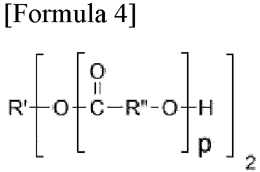

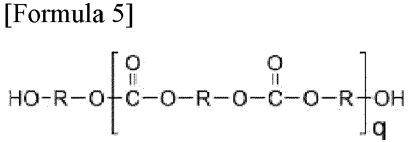

In Formula 1, n is an integer of 700 to 5,000;
in Formula 2, A is an alkylene group having 2 to 4 carbon atoms in the main chain and having 2 to 6 carbon atoms in total, and m is an integer of 10 to 100;
in Formula 3, R¹ is a linear or branched alkylene group having 2 to 5 carbon atoms, R² is a linear or branched alkylene group having 2 to 5 carbon atoms or an arylene group having 6 to 18 carbon atoms, 1 is an integer of 10 to 100, and k is an integer of 10 to 50;
in Formula 4, R' is a linear or branched alkylene group having 2 to 5 carbon atoms, R" is a linear or branched alkylene group having 1 to 5 carbon atoms, and p is an integer of 2 to 20; and
in Formula 5, R is a linear alkylene group having 2 to 5 carbon atoms, and q is an integer of 1 to 25.

The polylactic acid resin according to an embodiment comprises a hard segment comprising a polylactic acid repeat unit and a soft segment comprising a polyurethane polyol repeat unit. The polylactic acid repeat unit may enhance the biodegradability of the polylactic acid resin, and the polyurethane polyol repeat unit may enhance the mechanical properties such as flexibility and tear strength of the polylactic acid resin.

In some embodiments, the polylactic acid resin may be a block copolymer in which the hard segment and the soft segment are located separately from each other. For example, in the polylactic acid resin, a carboxylic acid group (-COOH) at the end of the polylactic acid repeat unit and a hydroxyl group (-OH) at the end of the polyurethane polyol repeat unit may form an ester bond (-COO-) to be connected. In such a case, it is possible to minimize the phenomenon of bleeding out of the soft segment, and the addition of the soft segment can suppress the deterioration of moisture resistance, mechanical properties, thermal resistance, transparency, or haze characteristics of the resin.

The polylactic acid repeat unit is represented by the following Formula 1.

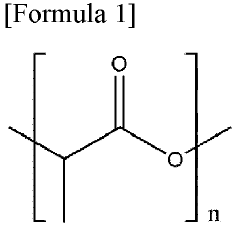

In Formula 1, n is an integer of 700 to 5,000.

In some embodiments, the polylactic acid repeat unit represented by Formula 1 may be a poly-L-lactic acid repeat unit, a poly-D-lactic acid repeat unit, or a combination thereof. Preferably, the polylactic acid repeat unit of Formula 1 may be a poly-L-lactic acid repeat unit.

The poly-L-lactic repeat unit may be derived from L-lactide or L-lactic acid, and the poly-D-lactic repeat unit may be derived from D-lactide or D-lactic acid.

The polylactic acid repeat unit obtained by copolymerization of the poly-L-lactic acid repeat unit and the poly-D-lactic acid repeat unit may be, for example, an atactic or heterotactic copolymerized repeat unit without particular stereoregularity (tacticity).

The polyurethane polyol repeat unit is formed by linearly connecting a polyether polyol repeat unit and at least one repeat unit selected from the group consisting of a polyester-based polyol repeat unit, a polylactone-based polyol repeat unit, and a polycarbonate-based polyol repeat unit via a urethane bond (-C(=O)-NH-).

The polyether polyol repeat unit may comprise one or more types, for example, two or more types of polyether polyol repeat units.

In some embodiments, the soft segment may comprise a polyurethane polyol repeat unit, which may be formed by linearly connecting the polyether polyol repeat unit and at least one repeat unit selected from the group consisting of a polyester-based polyol repeat unit, a polylactone-based polyol repeat unit, and a polycarbonate-based polyol repeat unit via a urethane bond (-C(=O)-NH-).

The polyether polyol repeat unit is represented by the following Formula 2. The polyether polyol repeat unit may enhance the mechanical properties such as flexibility, tear strength, and moldability of the polylactic acid resin. In some embodiments, the polyether polyol repeat units are mostly petroleum-based, but some may be derived from biomass.

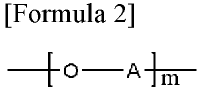

In Formula 2, A is an alkylene group having 2 to 4 carbon atoms in the main chain and having 2 to 6 carbon atoms in total, and m is an integer of 10 to 100.

When A contains 2 carbons in the main chain, the total number of carbon atoms may be 2 to 4. When A contains 3 carbons in the main chain, the total number of carbon atoms may be 3 to 6. When A contains 4 carbons in the main chain, the total number of carbon atoms may be 4 to 6.

The polyether polyol repeat unit may be derived from, for example, an alpha (α)-diol-based compound in which two hydroxyl groups are located at the alpha (α)-sites or an alkylene oxide-based compound (epoxide-based compound). The alpha (α)-diol-based compound and the alkylene oxide-based compound may have 2 to 4 carbon atoms.

For example, the alpha (α)-diol-based compound may comprise ethylene glycol, propylene glycol, 1,2-butanediol, 2,3-butanediol, or the like. The alkylene oxide-based compound may comprise ethylene oxide, propylene oxide, 1,2-butylene oxide, 2,3-butylene oxide, or the like. The alpha (α)-diol-based compound and the alkylene oxide-based compound may comprise a side chain of an alkyl group having 1 or 2 carbon atoms.

For example, a polyether polyol may be formed by condensation polymerization or ring-opening polymerization of the alpha (α)-diol-based compound and/or the alkylene oxide compound, and the polyether polyol may serve as the polyether polyol repeat unit.

In some embodiments, the polyether polyol repeat unit may be derived from two or more alkylene oxide-based compounds. For example, the alkylene oxide-based compound may comprise a combination of two or more of ethylene oxide, propylene oxide, and butylene oxide. Preferably, ethylene oxide and propylene oxide may be used together.

Examples of the polyether polyol repeat unit include polyethylene glycol (PEG) repeat units, polypropylene glycol) repeat units, or polyol repeat units obtained by copolymerizing ethylene oxide and propylene oxide, but it is not limited thereto.

In addition, the polyether polyol repeat unit may be derived from a beta (β)-diol-based compound comprising a hydrocarbon compound in which two hydroxy groups (-OH) are located at the beta (β)-sites or a gamma (γ)-diol-based compound in which two hydroxy groups are located at the gamma (γ)-sites. Alternatively, the polyether polyol repeat unit may be derived from an oxetane-based compound. The beta(β)-diol-based compound, the gamma(y)-diol-based compound, and the oxetane-based compound may have 3 to 6 carbon atoms.

For example, the beta (β)-diol-based compound may comprise 1,3-propanediol, 1,3-butanediol, 1,3-pentanediol, 2,4-pentanediol, 1,3-hexanediol, 2,4-hexanediol, or the like. The gamma (γ)-diol-based compound may comprise 1,4-butanediol, 1,4-pentanediol, 1,4-hexanediol, 2,4-hexanediol, or the like. The oxetane-based compound may comprise oxetane, 2-methyloxetane, 2-ethyloxetane, 3-methyloxetane, 3-ethyloxetane, or the like. The beta(β)-diol-based compound, the gamma(y)-diol-based compound, and the oxetane-based compound may comprise a side chain of an alkyl group having 1 or 2 carbon atoms.

For example, a polyether polyol may be formed by condensation polymerization or ring-opening polymerization of the beta(β)-diol-based compound, the gamma(γ)-diol-based compound, and/or the oxetane-based compound, and the polyether polyol may serve as the polyether polyol repeat unit.

In some embodiments, the soft segment may comprise a polyurethane polyol repeat unit, which may be formed by linearly connecting two or more types of the polyether polyol repeat units and at least one repeat unit selected from the group consisting of a polyester-based polyol repeat unit, a polylactone-based polyol repeat unit, and a polycarbonate-based polyol repeat unit via a urethane bond (-C(=O)-NH-).

In some embodiments, the polyether polyol or a repeat unit thereof may have a number average molecular weight of 1,000 to 10,000 g/mole. In such a case, the melting point, melt index, or the like of the polylactic acid resin can be adjusted to achieve excellent moldability, and the tear strength and flexibility of a polylactic acid resin film and molded article prepared therefrom can be enhanced together. Preferably, the number average molecular weight of the polyether polyol or a repeat unit thereof may be 1,000 to 5,000 g/mole, 1,000 to 3,000 g/mole, 1,000 to 2,500 g/mole, 1,000 to 2,400 g/mole, 1,500 to 10,000 g/mole, 1,500 to 5,000 g/mole, 1,500 to 3,000 g/mole, 1,500 to 2,500 g/mole, 1,500 to 2,400 g/mole, 2,000 to 10,000 g/mole, 2,000 to 5,000 g/mole, 2,000 to 3,000 g/mole, 2,000 to 2,500 g/mole, or 2,000 to 2,400 g/mole, but it is not limited thereto.

It is described in the present invention that the polyether polyol repeat unit may enhance the mechanical properties such as flexibility, tear strength, and moldability of a polylactic acid resin. However, if a polyether polyol repeat unit alone is contained in the soft segment (soft component), there arises a problem in that the biodegradability of the polylactic acid resin is deteriorated. On the other hand, at least one repeat unit selected from the group consisting of the polyester-based polyol repeat unit, the polylactone-based polyol repeat unit, and the polycarbonate-based polyol repeat unit is a polyol repeat unit having biodegradability itself, which can enhance the biodegradability of the polylactic acid resin.

The soft segment may comprise (1) a polyester-based polyol repeat unit derived from a polymer of a diol compound and a dicarbonyl compound, (2) a polylactone-based polyol repeat unit, (3) a polycarbonate-based polyol repeat unit, or a combination thereof.

The polyester-based polyol repeat unit derived from a polymer of a diol compound and a dicarbonyl compound (1) is represented by the following Formula 3.

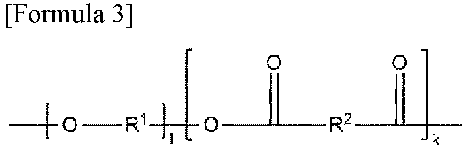

In Formula 3, R¹ is a linear or branched alkylene group having 2 to 5 carbon atoms, R² is a linear or branched alkylene group having 2 to 5 carbon atoms or an arylene group having 6 to 18 carbon atoms, 1 is an integer of 10 to 100, and k is an integer of 10 to 50.

In some embodiments, the polyester-based polyol repeat unit may be derived from a polyester-based polyol. Specifically, the polyester-based polyol repeat unit may be derived from a polymer of at least one diol compound and a dicarbonyl compound. The polyester-based polyol may be formed by reacting a diol compound and a dicarbonyl compound. The polyester-based polyol may be formed by forming an ester bond between a terminal hydroxyl group of the diol compound and a terminal dicarbonyl group of the dicarbonyl compound.

The diol compound has hydroxyl groups at both ends and may comprise an aliphatic diol compound having 2 to 5 carbon atoms, an aromatic diol compound having 6 to 18 carbon atoms, or an oligomer obtained by polymerization thereof. Two or more diol compounds or copolymers thereof may be used as the diol compound.

The dicarbonyl compound may comprise an aliphatic dicarboxylic acid compound having 2 to 7 carbon atoms and/or a derivative thereof. Preferably, the dicarbonyl compound may have 5 to 7 carbon atoms. The dicarboxylic acid derivative may comprise a cyclic dicarboxylic acid anhydride and a dicarboxylic acid dichloride, but it is not limited thereto.

In some embodiments, the dicarbonyl compound may comprise an aromatic dicarboxylic acid compound having 6 to 18 carbon atoms and/or a derivative thereof.

The dicarbonyl compound may comprise, for example, aliphatic dicarbonyl compounds such as oxalic acid, malonic acid, succinic acid, glutaric acid, and adipic acid. Preferably, it may comprise adipic acid. In such a case, the polylactic acid resin, and a polylactic acid resin film and molded article comprising the same may be enhanced in flexibility, biodegradability, and moldability.

In addition, the dicarbonyl compound may comprise, for example, phthalic acid, isophthalic acid, terephthalic acid, diphenyl acid, 2,6-naphthalene diacid, or the like. Preferably, it may comprise terephthalic acid. In such a case, the polylactic acid resin, and a polylactic acid resin film and molded article comprising the same may be enhanced in flexibility, biodegradability, and moldability.

In some embodiments, two or more types of diol compounds may be used as the diol compound to form a polyester polyol and polyester polyol repeat units having units derived from two different diol compounds. For example, the polyester-based polyol repeat unit may be represented by the following Formula 3-1. In such a case, the polylactic acid resin, and a polylactic acid resin film and molded article comprising the same may be enhanced in flexibility, biodegradability, and moldability.

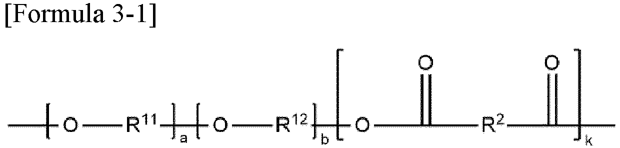

In Formula 3-1, R¹¹ and R¹² are each independently a linear or branched alkylene group having 2 to 5 carbon atoms, provided that R¹¹ and R¹² are different from each other, R² is a linear or branched alkylene group having 2 to 5 carbon atoms or an arylene group having 6 to 18 carbon atoms, a and b are integers, specifically, each independently an integer of 1 or more, provided that the sum of a and b is 10 to 100, and k is an integer of 10 to 50.

In some embodiments, two or more types of dicarbonyl compounds may be used as the dicarbonyl compound to form a polyester-based polyol and polyester-based polyol repeat units having units derived from two different dicarbonyl compounds. For example, the polyester-based polyol repeat unit may be represented by the following Formula 3-2. In such a case, the polylactic acid resin may be enhanced in flexibility, biodegradability, and moldability.

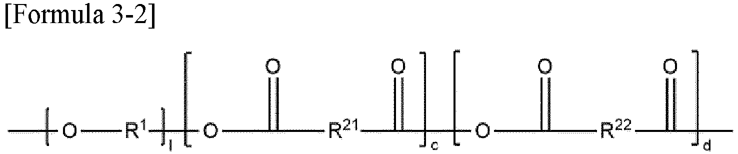

In Formula 3-2, R¹ is a linear or branched alkylene group having 2 to 5 carbon atoms, R²¹ and R²² are each independently a linear or branched alkylene group having 2 to 5 carbon atoms or an arylene group having 6 to 18 carbon atoms, provided that R²¹ and R²² are different from each other, 1 is an integer from 10 to 100, and c and d are integers, specifically, each independently an integer of 1 or more, provided that the sum of c and d is 10 to 50.

The polylactone-based polyol repeat unit (2) is represented by the following Formula 4.

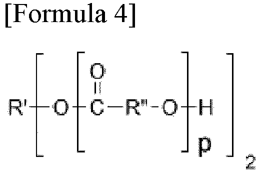

In Formula 4, R' is a linear or branched alkylene group having 2 to 5 carbon atoms, R" is a linear or branched alkylene group having 1 to 5 carbon atoms, and p is an integer of 2 to 20.

The polylactone-based polyol repeat unit represented by Formula 4 may comprise a polyester diol polymerized from a lactone monomer through a ring-opening reaction.

The polylactone-based polyol may be terminated by a primary hydroxyl group. Suitable polylactone-based polyols may be prepared from ε-caprolactone and a difunctional initiator such as diethylene glycol, 1,4-butane diol, or any of the other glycols and/or diols described herein. In some embodiments, the polylactone-based polyol may be a linear polyester diol derived from a caprolactone monomer.

Useful examples may include CAPA^{™} 2201A (a linear polyester diol with a number average molecular weight (Mn) of about 2,000 g/mole) and CAPA^{™} 2241A (a linear polyester diol with a number average molecular weight (Mn) of about 2,400 g/mole), both of which are commercially available from Ingevity Inc. These substances may also be referred to as polymers of 2-oxepanone and 1,4-butanediol. The polylactone-based polyol may be prepared from 2-oxepanone and a diol, wherein the diol may comprise 1,4-butane diol, diethylene glycol, monoethylene glycol, hexane diol, 2,2-dimethyl-1,3-propanediol, or any combination thereof. In some embodiments, the ring-opening initiator diol used to prepare the polylactone-based polyol may be linear.

In some embodiments, the polylactone-based polyol may be prepared from 1,4-butanediol.

In some embodiments, the polylactone-based polyol may have a number average molecular weight of 2,000 to 3,000 g/mole.

The polycarbonate-based polyol repeat unit (3) is represented by the following Formula 5.

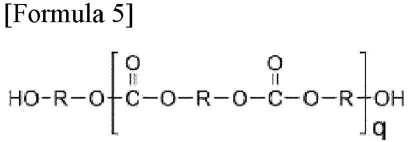

In Formula 5, R is a linear alkylene group having 2 to 5 carbon atoms, and q is an integer of 1 to 25.

The polycarbonate-based polyol repeat unit (3) represented by Formula 5 may comprise one prepared by reacting a glycol with a carbonate.

For example, U.S. Patent No. 4,131,731 may be incorporated herein by reference for hydroxyl-terminated polycarbonate polyols and their preparation. These polycarbonate-based polyols are linear, and the other terminal groups essentially have a terminal hydroxyl group. Required reactants may be glycol and carbonate functional groups.

Suitable glycols may be selected from alicyclic and aliphatic diols containing 4 to 40 and/or even 4 to 12 carbon atoms or polyoxyalkylene glycols containing 2 to 20 alkoxy groups per molecule, each alkoxy group containing 2 to 4 carbon atoms.

Suitable diols may comprise at least one selected from the group consisting of aliphatic diols containing 4 to 12 carbon atoms, such as 1,4-butanediol, 1,5-pentanediol, neopentyl glycol, 1,6-hexanediol, 1,6-2,2,4-trimethylhexane diol, 1,10-decanediol, hydrogenated dilinoleyl glycol, and hydrogenated dioleyl glycol; and alicyclic diols such as 1,3-cyclohexanediol, 1,4-dimethylolcyclohexane, 1,4-cyclohexanediol, 1,3-dimethylolcyclohexane, 1,4-endomethylene-2-hydridroxy-5-hydroxymethylcyclohexane, and polyalkylene glycol. Diols used in the reaction may comprise a single diol or a mixture of diols depending on the desired properties of the final product.

The hydroxyl-terminated polycarbonate intermediates may comprise those generally known in the art and in the literature. Suitable carbonates may be selected from alkylene carbonates composed of 5- to 7-membered rings. Suitable carbonates for use herein comprise at least one selected from the group consisting of ethylene carbonate, trimethylene carbonate, tetramethylene carbonate, 1,2-propylene carbonate, 1,2-butylene carbonate, 2,3-butylene carbonate, 1,2-ethylene carbonate, 1,3-pentylene carbonate, 1,4-pentylene carbonate, 2,3-pentylene carbonate, and 2,4-pentylene carbonate. In addition, the carbonate may comprise at least one selected from the group consisting of dialkyl carbonates, alicyclic carbonates, and diaryl carbonates.

The dialkyl carbonate may contain 2 to 5 carbon atoms in each alkyl group, and specific examples thereof include diethyl carbonate and dipropyl carbonate.

The alicyclic carbonates, particularly dialicyclic carbonates, may contain 4 to 7 carbon atoms in each cyclic structure, and one or two such structures may be present. When one group is alicyclic, the other may be alkyl or aryl. Alternatively, when one group is aryl, the other may be alkyl or alicyclic.

Suitable diarylcarbonates that may contain 6 to 20 carbon atoms in each aryl group may comprise at least one selected from the group consisting of diphenylcarbonate, ditolylcarbonate, and dinaphthylcarbonate.

In some embodiments, the polyester-based polyol, the polylactone-based polyol, and the polycarbonate-based polyol for forming the polyester-based polyol repeat unit, the polylactone-based polyol repeat unit, and the polycarbonate-based polyol repeat unit may have a weight average molecular weight of 3,000 to 300,000 g/mole, 3,000 to 250,000 g/mole, 3,000 to 200,000 g/mole, 3,000 to 150,000 g/mole, 3,000 to 140,000 g/mole, 3,000 to 100,000 g/mole, 3,000 to 90,000 g/mole, 3,000 to 80,000 g/mole, 3,000 to 70,000 g/mole, 3,000 to 60,000 g/mole, 3,000 to 50,000 g/mole, 3,000 to 40,000 g/mole, 3,000 to 30,000 g/mole, 3,000 to 20,000 g/mole, 3,000 to 10,000 g/mole, 3,000 to 9,000 g/mol 3,000 to 8,000 g/mole, 3,000 to 7,000 g/mole, 3,000 to 6,000 g/mole, 3,000 to 5,000 g/mole, 4,000 to 200,000 g/mole, 4,000 to 100,000 g/mole, 4,000 to 80,000 g/mole, 4,000 to 50,000 g/mole, 5,000 to 200,000 g/mole, 5,000 to 150,000 g/mole, 5,000 to 140,000 g/mole, 8,000 to 300,000 g/mole, 8,000 to 250,000 g/mole, 8,000 to 200,000 g/mole, 8,000 to 150,000 g/mole, 10,000 to 200,000 g/mole, 10,000 to 150,000 g/mole, or 10,000 to 140,000 g/mole.

If the polyester-based polyol, the polylactone-based polyol, and the polycarbonate-based polyol each satisfy a weight average molecular weight in the above range, the melting point, melt index, or the like of the polylactic acid resin are adjusted to achieve excellent moldability, along with enhanced biodegradation characteristics.

In some embodiments, the polyester-based polyol, the polylactone-based polyol, and the polycarbonate-based polyol for forming the polyester-based polyol repeat unit, the polylactone-based polyol repeat unit, and the polycarbonate-based polyol repeat unit may have a number average molecular weight of 500 to 200,000 g/mole, 500 to 100,000 g/mole, 500 to 60,000 g/mole, 500 to 50,000 g/mole, 500 to 20,000 g/mole, 500 to 10,000 g/mole, 500 to 8,000 g/mole, 500 to 5,000 g/mole, 500 to 4,000 g/mole, 500 to 2,000 g/mole, 800 to 200,000 g/mole, 800 to 100,000 g/mole, 800 to 60,000 g/mole, 800 to 50,000 g/mole, 800 to 20,000 g/mole, 800 to 10,000 g/mole, 800 to 8,000 g/mole, 800 to 5,000 g/mole, 800 to 4,000 g/mole, 800 to 2,000 g/mole, 1,000 to 200,000 g/mole, 1,000 to 100,000 g/mole, 1,000 to 60,000 g/mole, 1,000 to 50,000 g/mole, 1,000 to 20,000 g/mole, 1,000 to 10,000 g/mole, 1,000 to 8,000 g/mole, 1,000 to 5,000 g/mole, 1,000 to 4,000 g/mole, 1,000 to 3,000 g/mole, 1,000 to 2,000 g/mole, 2,000 to 4,000 g/mole, 10,000 to 70,000 g/mole, 20,000 to 60,000 g/mole, 30,000 to 60,000 g/mole, or 50,000 to 60,000 g/mole. In such a case, the melting point, melt index, or the like of the polylactic acid resin can be adjusted to achieve excellent moldability, along with enhanced biodegradation characteristics.

The polyurethane polyol repeat unit and/or at least one repeat unit selected from the group consisting of the polyester-based polyol repeat unit, the polylactone-based polyol repeat unit, and the polycarbonate-based polyol repeat unit may be connected via a urethane bond to each other. The urethane bond may connect two different types of polyurethane polyol repeat units with each other or at least one repeat unit selected from the group consisting of the polyester-based polyol repeat unit, the polylactone-based polyol repeat unit, and the polycarbonate-based polyol repeat unit each other. It may connect the polyurethane polyol repeat unit with at least one repeat unit selected from the group consisting of the polyester-based polyol repeat unit, the polylactone-based polyol repeat unit, and the polycarbonate-based polyol repeat unit. The urethane bond may be derived from a linear aliphatic diisocyanate compound.

The polyether polyol and at least one selected from the group consisting of the polyester polyol, the polylactone polyol, and the polycarbonate polyol may have a hydroxyl group at at least one of its terminals. The hydroxy group may react with a diisocyanate compound to form a urethane bond. The two isocyanate groups (-NCO) of one molecule of the diisocyanate compound may react with a polyether polyol and at least one selected from the group consisting of the polyester-based polyol, the polylactone-based polyol, and the polycarbonate-based polyol, respectively, to form a urethane polyol. The polyurethane polyol may form the polyurethane polyol repeat unit.

In some embodiments, the diisocyanate compound may comprise an aliphatic diisocyanate compound having 2 to 12 carbon atoms, an aromatic diisocyanate compound having 6 to 18 carbon atoms, or a combination thereof.

Examples of the diisocyanate compound include 1,6-hexamethylene diisocyanate, 2,4-toluene diisocyanate, 2,6-toluene diisocyanate, 1,3-xylene diisocyanate, 1,4-xylene diisocyanate, 1,5-naphthalene diisocyanate, m-phenylene diisocyanate, p-phenylene diisocyanate, 3,3'-dimethyl-4,4'-diphenylmethane diisocyanate, 4,4'-bisphenylene diisocyanate, isophorone diisocyanate, and hydrogenated diphenylmethane diisocyanate. In addition, various diisocyanate compounds widely known to those skilled in the art may be used without particular limitation.

Preferably, the diisocyanate compound may comprise a linear aliphatic diisocyanate compound such as 1,6-hexamethylene diisocyanate. In such a case, the polyether polyol repeat unit may be linearly connected with at least one repeat unit selected from the group consisting of the polyester-based polyol repeat unit, the polylactone-based polyol repeat unit, and the polycarbonate-based polyol repeat unit, thereby improving the flexibility and moldability of the polylactic acid resin.

The polyether polyol repeat unit and the diisocyanate compound may be reacted such that the molar ratio between a terminal hydroxyl group of the polyether polyol repeat unit and an isocyanate group of the diisocyanate compound is 1:0.50 to 1:0.99. Preferably, the molar ratio may be 1:0.60 to 1:0.90 or 1:0.70 to 1:0.85.

The soft segment comprises 0.5% by weight or more of at least one repeat unit selected from the group consisting of the polyester-based polyol repeat unit, the polylactone-based polyol repeat unit, and the polycarbonate-based polyol repeat unit based on the total weight of the polyether polyol repeat unit, the polyester-based polyol repeat unit, the polylactone-based polyol repeat unit, and the polycarbonate-based polyol repeat unit. If the content of at least one repeat unit selected from the group consisting of the polyester-based polyol repeat unit, the polylactone-based polyol repeat unit, and the polycarbonate-based polyol repeat unit is less than 0.5% by weight, the polylactic acid resin and a polylactic acid resin film and molded article comprising the same may be deteriorated in biodegradability and mechanical properties.

In some embodiments, the soft segment may comprise 25 to 99.5% by weight of the polyether polyol repeat unit and 0.5 to 75% by weight of at least one repeat unit selected from the group consisting of the polyester-based polyol repeat unit, the polylactone-based polyol repeat unit, and the polycarbonate-based polyol repeat unit based on the total weight of the polyether polyol repeat unit, the polyester-based polyol repeat unit, the polylactone-based polyol repeat unit, and the polycarbonate-based polyol repeat unit. In such a case, the moldability and flexibility of the polylactic acid resin may be enhanced, and the biodegradability and tear strength of the polylactic acid resin film and molded article may be increased. Thus, the polylactic acid resin can be advantageously applied to biodegradable packaging materials that require a high tear strength characteristic. Preferably, at least one repeat unit selected from the group consisting of the polyester-based polyol repeat unit, the polylactone-based polyol repeat unit, and the polycarbonate-based polyol repeat unit may be employed in an amount of 5 to 70% by weight or 10 to 60% by weight, and the polyether polyol repeat unit may be employed in an amount of 30 to 95% by weight or 40 to 90% by weight, they are not limited thereto.

In some embodiments, the polylactic acid resin may comprise 5 to 40% by weight of the soft segment based on the total weight of the polylactic acid resin. For example, the soft segment may comprise a polyurethane polyol repeat unit, and it may be adjusted by changing the relative amount of lactide and total polyol components. In such a case, the polylactic acid resin may be lowered in melting temperature and enhanced in flexibility. Thus, a polylactic acid resin film and molded article comprising the polylactic acid resin may be enhanced in moldability and mechanical properties. Preferably, the soft segment may be employed in an amount of 7 to 40% by weight, 8 to 40% by weight, 7 to 35% by weight, 8 to 35% by weight, 10 to 35% by weight, 15 to 30% by weight, 20 to 30% by weight, or 20 to 25% by weight, based on the total weight of the polylactic acid resin.

In some embodiments, the hard segment may be employed in a balanced amount of the soft segment of the polylactic acid resin. For example, it may be employed in an amount of 60 to 95% by weight based on the total weight of the polylactic acid resin.

In some embodiments, two or more polylactic acid resin molecules may be connected by a chain extender. In such a case, the molecular weight and viscosity of the polylactic acid resin may increase. The chain extender may comprise an acrylate-based polymer compound. For example, it may comprise an acrylate-based polymer compound comprising an epoxy group in a side chain.

In some embodiments, the polylactic acid resin molecules and the chain extender may be reacted at 170 to 200°C. This reaction may be carried out under pressurized conditions of about 0.1 to 5 kgf.

In some embodiments, the polylactic acid resin may have a biodegradability of 90% or more. The biodegradability may be defined according to the EN ISO 14855-1:2013 standard. When the biodegradability reaches 90% within the period measured for a minimum of 90 days and a maximum of 180 days, the biodegradability can be evaluated to be good. Biodegradability may be defined as the biodegradability of a sample relative to the biodegradability of cellulose. Preferably, the biodegradability may be 90% or more or 100% or more.

In some embodiments, the polylactic acid resin may have a content of biomass-derived repeat units of 70% by weight or more. The content of the repeat unit may refer to a weight ratio of the repeat unit or biomass-derived raw materials that form the repeat unit out of the total amount of input raw materials. The biomass-derived repeat unit may be derived from lactide and/or the beta (β)-diol-based compound. For example, it may comprise a polylactic acid repeat unit and/or the polyether polyol repeat unit. In such a case, the polylactic acid resin may have excellent mechanical properties while the carbon reduction effect is enhanced. Preferably, the content of the biomass-derived repeat unit may be 71% by weight or more, 72% by weight or more, 75% by weight or more, 77% by weight or more, 78% by weight or more, 80% by weight or more, or 85% by weight or more.

In some embodiments, the polylactic acid resin may have a melt flow index (MI) of 0.1 to 55 g/10 minutes. In such a case, the polylactic acid resin may be enhanced in processability. For example, during extrusion molding such as a blown film process, bubbles of the polylactic acid resin film may maintain a stable shape, and defects such as wrinkles on the film may be suppressed. Preferably, the melt flow index of the polylactic acid resin may be 0.1 to 43 g/10 minutes, 0.2 to 43 g/10 minutes, 0.5 to 43 g/10 minutes, 1 to 43 g/10 minutes, 2 to 43 g/10 minutes, 5 to 43 g/10 minutes, 5 to 40 g/10 minutes, 5 to 30 g/10 minutes, 5 to 25 g/10 minutes, 5 to 20 g/10 minutes, 7 to 43 g/10 minutes, 7 to 40 g/10 minutes, or 7 to 30 g/10 minutes.

In some embodiments, the polylactic acid resin may have a number average molecular weight (Mn) of 50,000 to 250,000 g/mole, preferably 50,000 to 150,000 g/mole. In addition, the polylactic acid resin may have a weight average molecular weight (Mn) of 50,000 to 500,000 g/mole, preferably 150,000 to 350,000 g/mole. When Mn and Mw are within the above ranges, the mechanical properties of a molded article obtained from the polylactic acid resin may be further excellent.

In some embodiments, the polylactic acid resin may have a glass transition temperature (Tg) of 20°C to 80°C, preferably 20°C to 40°C. A molded article prepared from a polylactic acid resin having a Tg of the above range may be optimized for flexibility or stiffness.

The polylactic acid resin may have a melting temperature (Tm) of 130°C to 180°C, preferably 130°C to 165°C, 135°C to 165°C, or 139°C to 162°C. When Tm is within the above range, the polylactic acid resin may be further enhanced in processability.

### Polylactic acid resin composition

A polylactic acid resin composition according to embodiments comprises the polylactic acid resin. The polylactic acid resin composition may further comprise other additives.

The polylactic acid resin may be employed in an amount of 60 to 95% by weight, for example, 70 to 85% by weight based on the total weight of the polylactic acid resin composition. In such a case, it is possible to enhance tear strength, flexibility, and impact resistance without impairing mechanical properties, thermal resistance, blocking resistance, transparency, and biodegradability of the polylactic acid resin composition.

Other additives may comprise nucleating agents, other resins, stabilizers, antioxidants, and the like.

The nucleating agent may comprise a poly-D-lactic acid (PDLA) resin and talc.

The poly-D-lactic acid resin may have a weight average molecular weight (Mw) of 100,000 to 500,000 g/mole, preferably, a weight average molecular weight (Mw) of 100,000 to 350,000 g/mole.

The poly-D-lactic acid resin may be employed in an amount of 1 to 20% by weight, preferably, 1 to 10% by weight based on the total weight of the polylactic acid resin composition. If the weight average molecular weight (Mw) and added amount of the poly-D-lactic acid resin are within the above ranges, the polylactic acid resin composition may be further enhanced in thermal resistance, tear strength, and flexibility.

Talc has an average particle diameter of 0.5 to 2.5 µm. Specifically, it may have an average particle diameter of 0.5 to 1.5 µm.

Talc may be employed in an amount of 1 to 20% by weight, specifically, 1 to 15% by weight based on the total weight of the polylactic acid resin composition. If the added amount of talc is within the above range, the polylactic acid resin composition may be further enhanced in crystallinity.

The polylactic acid resin composition may further comprise a polylactic acid single resin as a resin component other than the polylactic acid resin.

The polylactic acid resin composition may further comprise a phosphorus-based stabilizer and/or antioxidant in order to suppress the oxidation or thermal decomposition of the soft segment during the preparation process thereof.

The phosphorus-based stabilizer and antioxidant may be appropriately selected from those commonly used. Examples of the antioxidant include hindered phenol-based antioxidants, amine-based antioxidants, thio-based antioxidants, and phosphite-based antioxidants.

In addition to these stabilizers and antioxidants, the polylactic acid resin composition may further comprise various additives such as various known plasticizers, UV stabilizers, anti-coloring agents, matting agents, deodorants, flame retardants, weathering agents, antistatic agents, release agents, antioxidants, ion exchangers, coloring pigments, and inorganic or organic particles within the range of not impairing the effects thereof.

Examples of the plasticizer include phthalic acid ester plasticizers such as diethyl phthalate, dioctyl phthalate, and dicyclohexyl phthalate; aliphatic dibasic acid ester plasticizers such as di-1-butyl adipate, di-n-octyl adipate, di-n-butyl sebacate, and di-2-ethylhexyl azelate; phosphoric acid ester plasticizers such as diphenyl 2-ethylhexyl phosphate and diphenyl octyl phosphate; hydroxy polyvalent carboxylic acid ester plasticizers such as tributyl acetyl citrate, tri-2-ethylhexyl acetyl citrate, and tributyl citrate; fatty acid ester plasticizers such as methyl acetyl ricinoleate and amyl stearate; polyhydric alcohol ester plasticizers such as glycerin triacetate; and epoxidized plasticizers such as epoxidized soybean oil, epoxidized amani oil fatty acid butyl ester, and octyl epoxy stearate.

Further, examples of the coloring pigment include inorganic pigments such as carbon black, titanium oxide, zinc oxide, and iron oxide; and organic pigments such as cyanine-based, phosphorus-based, quinone-based, relinone-based, isoindolinone-based, and thioindigo-based pigments.

### Polylactic acid resin molded article

A molded article according to embodiments comprises the polylactic acid resin. For example, the molded article may be prepared by molding the polylactic acid resin or the polylactic acid resin composition.

The molding may include known molding methods such as extrusion molding and injection molding. The polylactic acid resin according to embodiments may have a relatively low melt index (MI); thus, it is possible to effectively prepare a film having a uniform thickness and physical properties through extrusion molding such as a blown film process.

The polylactic acid resin molded article according to embodiments not only has excellent transparency and biodegradability, but also has excellent molding processability to be readily molded into various thicknesses and shapes, and it also has excellent flexibility. Thus, it can be used as a packaging material for various products. In addition, the polylactic acid resin molded article can effectively enhance flexibility and tear strength by adjusting the composition of components forming the soft segment, and it simultaneously has excellent biodegradability. Thus, it can be used for various purposes.

Physical properties of the polylactic acid resin molded article may be the same as those of the polylactic acid resin film to be described below.

### Polylactic acid resin film

A polylactic acid resin film according to embodiments comprises the polylactic acid resin. For example, the polylactic acid resin film may be prepared by molding the polylactic acid resin or the polylactic acid resin composition through extrusion molding such as a blown film process.

For example, as the polylactic acid resin has excellent moldability, biodegradability, and mechanical properties, the polylactic acid resin film may also have excellent mechanical properties, transparency, and biodegradability.

In some embodiments, the polylactic acid resin film may have a haze (transparency) of 40% or less, 30% or less, or 28% or less, as measured according to ASTM D1003-97, based on a thickness of 35 to 50 µm. In such a case, the polylactic acid resin film may have excellent transparency.

In some embodiments, the polylactic acid resin film may have a Young's modulus of 2,000 MPa or less in each of the longitudinal direction (MD) and transverse direction (TD) of the film, as measured according to ASTM D882, based on a thickness of 35 to 50 µm. In such a case, the polylactic acid resin film may have excellent flexibility.

Specifically, the polylactic acid resin film may have a Young's modulus in the longitudinal direction (MD) of 2,000 MPa or less, for example, 100 MPa to 2,000 MPa, 150 MPa to 2,000 MPa, 200 MPa to 2,000 MPa, 100 MPa to 1,950 MPa, 150 MPa to 1,950 MPa, or 200 MPa to 1,950 MPa.

In addition, the polylactic acid resin film may have a Young's modulus in the transverse direction (TD) of 2,000 MPa or less, for example, 100 MPa to 2,000 MPa, 150 MPa to 2,000 MPa, 200 MPa to 2,000 MPa, 100 MPa to 1,800 MPa, 150 MPa to 1,800 MPa, 200 MPa to 1,800 MPa, 100 MPa to 1,700 MPa, 150 MPa to 1,700 MPa, or 200 MPa to 1,700 MPa.

In addition, the polylactic acid resin film may have a sum of Young's moduli in the longitudinal direction (MD) and the transverse direction (TD) of 4,000 MPa or less, for example, 200 MPa to 4,000 MPa, 200 MPa to 3,600 MPa, 400 MPa to 3,600 MPa, or 400 MPa to 3,000 MPa.

The sum of the Young's moduli in the longitudinal direction (MD) and the transverse direction (TD) corresponds to the flexibility of the film. The lower the Young's modulus, the better the flexibility.

In some embodiments, the polylactic acid resin film may have a tear strength of 3 N/mm or more in each of the longitudinal direction and transverse direction of the film, as measured according to ASTM D1922, based on a thickness of 35 to 50 µm. In such a case, the polylactic acid resin film may have excellent tear resistance.

Specifically, the polylactic acid resin film may have a tear strength in the longitudinal direction (MD) of 3 N/mm or more, for example, 3 N/mm to 200 N/mm, 3 N/mm to 150 N/mm, 3 N/mm to 100 N/mm, 3 N/mm to 80 N/mm, 3 N/mm to 70 N/mm, 3.2 N/mm to 200 N/mm, 3.2 N/mm to 150 N/mm, 3.2 N/mm to 100 N/mm, 3.2 N/mm to 80 N/mm, or 3.2 N/mm to 70 N/mm.

In addition, the polylactic acid resin film may have a tear strength in the transverse direction (TD) of 3 N/mm or more, for example, 3 N/mm to 200 N/mm, 3 N/mm to 150 N/mm, 3 N/mm to 100 N/mm, 3 N/mm to 80 N/mm, 4 N/mm to 200 N/mm, 4 N/mm to 150 N/mm, 4 N/mm to 100 N/mm, 4 N/mm to 80 N/mm, 4.5 N/mm to 200 N/mm, 4.5 N/mm to 150 N/mm, 4.5 N/mm to 100 N/mm, or 4.5 N/mm to 80 N/mm.

In addition, the polylactic acid resin film may have a noise of 70 dB or less, less than 70 dB, 69 dB or less, or 67 dB or less, specifically, 50 to 70 dB, 50 to 69 dB, or 55 to 67 dB, when the noise is measured with a noise meter for a film specimen prepared in A4 size, both ends of which are held by both hands and crumpled 10 to 15 times for 10 seconds.

### Process for preparing a polylactic acid resin

The process for preparing a polylactic acid resin according to embodiments comprises reacting a polyether polyol; at least one selected from the group consisting of a polyester-based polyol, a polylactone-based polyol, and a polycarbonate-based polyol; and a linear aliphatic diisocyanate compound to form a soft segment; and reacting the soft segment with lactide to connecting a hard segment comprising a polylactic acid repeat unit with the soft segment.

Thus, at least one selected from the group consisting of the polyether polyol, polyester-based polyol, polylactone-based polyol, and polycarbonate-based polyol and a linear aliphatic diisocyanate compound may be reacted to form a polyurethane polyol connected via a urethane bond.

The polyether polyol may comprise two or more types of polyether polyols. For example, one of the polyether polyols may be derived from the beta(β)-diol-based compound, gamma(y)-diol-based compound, and/or oxetane-based compound, and the other polyether polyol may be derived from the alpha(α)-diol-based compound or alkylene oxide-based compound.

In some embodiments, the soft segment may be formed by reacting at least one repeat unit selected from the group consisting of a polyester-based polyol repeat unit, a polylactone-based polyol repeat unit, and a polycarbonate-based polyol repeat unit and a linear aliphatic diisocyanate compound.

At least one selected from the group consisting of the polyether polyol, polyester-based polyol, polylactone-based polyol, and polycarbonate-based polyol and a linear aliphatic diisocyanate compound may be those described above. A urethane reaction catalyst commonly used in the art may be used as a reaction catalyst without limitation.

For example, the urethane reaction catalyst includes divalent tin-based catalysts such as stannous octoate (tin(II) 2-ethylhexanoate), dibutyltin dilaurate, dioctyltin dilaurate, and the like.

In some embodiments, the urethane reaction catalyst may be employed in an amount of 10 to 500 ppm based on the total weight of the reactants.

The urethane reaction may be carried out under an inert gas atmosphere, such as nitrogen gas, for 1 to 5 hours at a temperature of 60°C to 100°C.

Subsequently, the polyurethane polyol may be reacted with lactic acid (D- or L-lactic acid) or lactide (D- or L-lactide). In such a case, a plurality of lactic acid molecules or lactide molecules may be sequentially polymerized at one end of the polyurethane polyol segment to form a polylactic acid hard segment, whereby a block copolymer in which the soft segment and the hard segment are connected may be formed.

The lactic acid or lactide may react with the polyurethane polyol in a dissolved state. For example, a mixture of the polyurethane polyol and lactic acid or lactide is heated to a temperature of about 140°C or higher, and the lactic acid or lactide is dissolved to participate in the reaction.

The formation reaction of a polylactic acid hard segment may be carried out in the presence of a metal catalyst including alkaline earth metal, rare earth metal, transition metal, aluminum, germanium, tin, or antimony. More specifically, such metal catalysts may include carboxylates, alkoxides, halides, oxides, or carbonates of these metals. Preferably, tin octoate, titanium tetraisopropoxide, aluminum triisopropoxide, or the like may be used as the metal catalyst. The catalyst may be employed in an amount of 10 to 500 ppm based on the total weight of the reactants.

The formation reaction of a polylactic acid hard segment may be carried out for 30 minutes to 4 hours at a temperature condition of about 170 to 200°C under an inert gas atmosphere such as nitrogen gas.

In some embodiments, the formation reaction of a hard segment may be terminated by a polymerization terminator. The polymerization terminator may comprise a polyvalent carboxylic acid compound having a hydroxy group such as tartaric acid. The polymerization terminator may be employed in an amount of about 100 to 5,000 ppm based on the total weight of the reactants.

In some embodiments, the process for preparing a polylactic acid resin may further comprise increasing the viscosity of the polylactic acid resin by reacting a chain extender in an amount of 0.01 to 2% by weight based on the total weight of the polylactic acid resin once the hard segment and the soft segment have been connected.

The viscosity of the polylactic acid resin may be increased by reacting a chain extender once the hard segment and the soft segment have been connected.

Specifically, the chain extender may be employed in an amount of, for example, 0.01 to 2% by weight, 0.01 to 1.8% by weight, or 0.02 to 1.5% by weight, based on the total weight of the polylactic acid resin.

The chain extender may connect at least two of unit polylactic acid resin molecules to which the hard segment and the soft segment are connected, whereby the molecular weight and viscosity of the polylactic acid resin may increase. The chain extender may comprise an acrylate-based polymer compound. For example, it may comprise an acrylate-based polymer compound comprising an epoxy group in a side chain.

In some embodiments, upon completion of the formation reaction of a polylactic acid hard segment, a step of removing unreacted lactic acid or lactide may be carried out. The step of removing unreacted lactic acid or lactide may be carried out under vacuum conditions of a reduced pressure of about 0.1 to 1 Torr. Here, 1 to 10% by weight of the charged lactic acid or lactide may be removed.

A polylactic acid resin composition may be formed by mixing a polylactic acid resin and an additive such as a nucleating agent together. Specifically, the polylactic acid resin may be mixed with an additive such as a nucleating agent and compounded at 170 to 200°C in an apparatus such as a twin-screw extruder to form a polylactic acid resin composition.

### Embodiments for Carrying Out the Invention

Hereinafter, the present invention will be described in detail with reference to Examples. The following examples are merely illustrative of the present invention, and the scope of the present invention is not limited thereto.

### Preparation Example 1: Preparation of a polylactic acid resin

An 8-liter capacity reactor equipped with a nitrogen gas inlet tube, an agitator, a catalyst inlet, an outlet condenser, and a vacuum system was charged with polyol a (EO-PPG: a copolymer polyol of ethylene oxide and propylene oxide, number average molecular weight of about 2,400 g/mole), polyol b (PPDO 2.0: poly(1,3-propanediol), number average molecular weight of about 2,000 g/mole), polyol c at a weight ratio shown in Tables 1 and 2 below and about 60 g of hexamethylene diisocyanate (HDI), along with a catalyst. 120 ppm of tin (II) 2-ethylhexanoate based on the total weight of the reactants was used as a catalyst. The urethane reaction was carried out for 2 hours under a nitrogen stream at a temperature inside the reactor of 70°C. Then, 4 kg of lactide was added thereto, and nitrogen flushing was performed 5 times.

The total amount of polyols a to c was adjusted such that the content in a percent by weight of a polyurethane polyol repeat unit formed by combining the polyols with hexamethylene diisocyanate (HDI) was as shown in Tables 1 and 2 below in the total polylactic acid resin.

Thereafter, the temperature was raised to 150°C to completely dissolve lactide, and 120 ppm of a tin (II) 2-ethylhexanoate catalyst based on the total weight of the reactants was added into the reactor through the catalyst inlet. The reaction was carried out for 2 hours at 185°C and a nitrogen pressure of 1 kg. Then, 1,000 ppm of tartaric acid was added through the catalyst inlet and mixed for 15 minutes to terminate the polymerization reaction. Subsequently, a chain extender (Joncryl ADR 4368, BASF) was added into the reactor inlet and mixed at 170°C to 200°C for 30 minutes under a pressure of 0.5 kg to increase the viscosity. Polylactic acid resin was obtained by removing unreacted lactide (about 5% by weight of the initial input amount) through a vacuum reaction until reaching 0.5 Torr.

### Test Example 1: Evaluation of physical properties of the polylactic acid resins

The polylactic acid resins were each measured and evaluated for their physical properties by the following methods. The results are shown in Tables 1 and 2 below.
(1) Tm (melting temperature, °C): measured using a differential scanning calorimeter (manufacturer: TA Instruments) as a sample was melted and rapidly cooled, followed by heating thereof at 10°C/minute. The temperature of the maximum value of the melting endothermic peak of crystals was defined as Tm.
(2) MI (melt index, g/10 minutes): A melt flow indexer (manufacturer: JJ-Test) was used. A sample was melted at 180°C for 3 minutes, and a weight of 2.16 kg was placed on it to measure the melt flow rate for 10 seconds.
(3) Content of biomass-derived repeat units (% by weight): The input amount of biomass-derived raw materials (lactide and polyol b) was expressed as a percent by weight among the total raw materials used in the polymerization.
(4) Biodegradability (%): The biodegradability of each test substance was measured by a test institute authorized by the TUV Austria certification as a relative value to cellulose for a minimum of 90 days and a maximum of 180 days according to the EN ISO 14855-1:2013 standard. The biodegradability at 180 days is shown in Table 1 below.
(5) 90% biodegradation within 180 days: Whether or not the biodegradability reached 90% within 180 days as the test-passing standard was evaluated as reached/not reached.
(6) Content of polyurethane polyol repeat units (% by weight): The content of polyurethane polyol repeat units contained in each polylactic acid resin prepared was quantified using a 600-MHz nuclear magnetic resonance (NMR) spectrometer.

**[Table 1]**

| Resin | A | B | C | D | E | F | G | H | I | J | K | L | M |
|---|---|---|---|---|---|---|---|---|---|---|---|---|---|
| Polyol a | EO-PPG | EO-PPG | EO-PPG | EO-PPG | EO-PPG | EO-PPG | EO-PPG | PPG | PPG | PPG | PPG | PPG | PPG |
| Polyol b | PO3G | PO3G | PO3G | PO3G | PO3G | PO3G | - | - | - | - | - | - | - |
| Polyol c | PBA | PEBA | PEBA | PBAT | PBA | PEBA | PEBA | PCL | PCL | PCL | PCL | PC-ol | PC-ol |
| Weight ratio of polyols a/b/c | 2/7/1 | 6/3/1 | 7/2/1 | 0/9.95/0. 05 | 0/7.5/2.5 | 0/9/1 | 7/0/3 | 7/0/3 | 6/0/4 | 5/0/5 | 4/0/6 | 4/0/6 | 3/0/7 |
| Content of polyurethane polyol repeat units (% by weight) | 15 | 18 | 18 | 20 | 35 | 25 | 18 | 10 | 22 | 22 | 22 | 25 | 28 |
| Content of a chain extender (% by weight) | 0.5 | 0.4 | 0.4 | 0.3 | 0.5 | 0.4 | 0.5 | 1.5 | 0.05 | 0.1 | 0.02 | 0.5 | 0.6 |
| Tm (°C) | 160 | 155 | 155 | 156 | 139 | 148 | 154 | 162 | 151 | 153 | 154 | 160 | 158 |
| MI (g/10 min, at 180°C, 2.16kg) | 7 | 12 | 13 | 20 | 31 | 25 | 11 | 2 | 40 | 36 | 43 | 24 | 19 |
| Content of biomass-derived repeat units (% by weight) | 96 | 87 | 86 | 99 | 91 | 98 | 82 | 90 | 77 | 78 | 77 | 73 | 71 |
| Biodegradability (%) | 95.4 | 92.4 | 90.9 | 90.3 | 90.2 | 94 | 90.3 | 94.3 | 100 | 97 | 100 | 90.2 | 91.4 |
| Biodegradability of 90% within 180 days | Reached | Reached | Reached | Reached | Reached | Reached | Reached | Reached | Reached | Reached | Reached | Reached | Reached |

**[Table 2]**

| Resin | N | O | P | Q | R | s | T |
|---|---|---|---|---|---|---|---|
| Polyol a | EO-PPG | PPG | EO-PPG | EO-PPG | - | PPG | PPG |
| Polyol b | PO3G | - | - | - | - | - | - |
| Polyol c | PBA | - | - | - | PCL | - | - |
| Weight ratio of polyols a/b/c | 8/1.98/0.02 | 10/0/0 | 10/0/0 | 10/0/0 | 0/0/10 | 10/0/0 | 10/0/0 |
| Content of polyurethane polyol repeat units (% by weight) | 18 | 22 | 12 | 45 | 20 | 48 | 20 |
| Content of a chain extender (% by weight) | 0.4 | 0.05 | 0.5 | 0.005 | 0 | 0.3 | 3 |
| Tm (°C) | 154 | 151 | 165 | 135 | 160 | 152 | 154 |
| MI (g/10 min, at 180°C, 2.16kg) | 12 | 43 | 10 | 45 | 20 | 60 | Not measurable |
| Content of biomass-derived repeat units (% by weight) | 85 | 78 | 88 | 55 | 79 | 77 | 78 |
| Biodegradability (%) | 87.3 | 75 | 82.8 | 71.2 | 100 | 70.1 | 68 |
| Biodegradability of 90% within 180 days | Not reached | Not reached | Not reached | Not reached | Reached | Not reached | Not reached |

| | | | | | | | |
|---|---|---|---|---|---|---|---|
| * EO-PPG: copolymer polyol of ethylene oxide and propylene oxide, number average molecular weight of about 2,400 g/mole * PO3G: polytrimethylene ether glycol, number average molecular weight of about 2,000 g/mole * PPG: polypropylene glycol, number average molecular weight of about 2,000 g/mole * PEBA: poly(ethylene-butylene adipate) (a polyester polyol made from a condensate of 1,4-butanediol, ethylene glycol, and adipic acid), weight average molecular weight 4,000 g/mole, number average molecular weight about 2,000 g/mole * PBA: polybutylene adipate, weight average molecular weight of about 4,000 g/mole, number average molecular weight of about 2,000 g/mole * PBAT: polybutylene adipate terephthalate, weight average molecular weight of about 130,000 g/mole, number average molecular weight of about 55,000 g/mole, dimethyl terephthalate (DMT)/adipic acid (AA)/1,4-butanediol (1 ,4-BD) = 48/52/100% by mole * PCL: polycaprolactone polyol (Ingevity, Capa2201A), number average molecular weight of about 2,000 g/mole * PC-ol: polycarbonate diol (BENEBiOL, NL2010DB), number average molecular weight of about 2,000 g/mole | | | | | | | |

Referring to Tables 1 and 2, in resins A to M comprising 0.5% by weight or more of at least one repeat unit selected from the group consisting of the polyester-based polyol repeat unit, polylactone-based polyol repeat unit, and polycarbonate-based polyol repeat unit in the soft segment and a polyether polyol repeat unit together, they had an excellent biodegradability of about 90% or more, and the polylactic acid resin had a low MI, resulting in excellent extrusion moldability.

### Preparation Example 2: Preparation of a polylactic acid resin film

### Examples 1 to 13 and Comparative Examples 1 to 7

Resins A to T were each dried under vacuum conditions of a reduced pressure of 1 Torr and 110°C for 6 hours, extruded at a temperature of 170°C through a blown film line of a single-screw extruder to prepare a film having a thickness of about 35 to 50 µm.

### Comparative Example 8

A PLA resin (4032D) of Natureworks was dried under vacuum conditions of a reduced pressure of 1 Torr and 80°C for 6 hours, extruded at a temperature of 190°C through a blown film line of a single-screw extruder to prepare a film having a thickness of about 35 to 50 µm.

### Comparative Example 9

A PLA resin (4032D) of Natureworks and a PBAT resin of BASF (weight average molecular weight of about 130,000 g/mole, number average molecular weight of about 55,000 g/mole, dimethyl terephthalate (DMT)/adipic acid (AA)/1,4-butanediol (1,4-BD) = 48/52/100% by mole) were mixed at a ratio of 3:7, and 0.3% by weight of ADR (4368, BASF) as a chain extender was added thereto, which was extruded through a twin-screw extruder to obtain a PLA/PBAT mixture composition. The PLA/PBAT mixture composition was dried under vacuum conditions of a reduced pressure of 1 Torr and 80°C for 6 hours, extruded at a temperature of 190°C through a blown film line of a single-screw extruder to prepare a film having a thickness of about 35 to 50 µm.

### Test Example 2: Evaluation of physical properties of the films

The polylactic acid resin films were each measured and evaluated for their physical properties by the following methods.
(1) Film processability: Bubble stability was evaluated according to the following criteria when a film formed a bubble in a blown film line during film production.
   ⊚: when a bubble was initially formed, the bubble was not shaken and was stable without the need to change process conditions such as outside air during extrusion
   ○: bubble occasionally shaken during extrusion, but was mostly stable
   △: bubble frequently shaken during extrusion, causing wrinkles in the film
   ×: film was not formed
(2) Noise (dB): Noise was measured with a noise meter for a film specimen prepared in A4 size, both ends of which were held by both hands and crumpled 10 to 15 times for 10 seconds.
(3) Film haze (%): A polylactic acid resin film specimen having a thickness of 35 to 40 µm was prepared, and the haze of the specimen was measured using a Minolta CM-3600A measuring instrument in accordance with the ASTM D1003-97 measurement method.
(4) Young's modulus (MPa) of a film: A film sample with a length of 150 mm and a width of 15 mm was tested using a UTM (manufacturer: INSTRON) universal testing machine in accordance with ASTM D882 under conditions of a stretching speed of 50 mm/minute and a distance between grips of 100 mm to measure the Young's modulus. An average value of a total of 5 tests was recorded. The Young's modulus, especially, the sum of the Young's moduli in the longitudinal direction and the transverse direction corresponds to the flexibility of the film. The lower the Young's modulus, the better the flexibility. The longitudinal direction of the film corresponds to MD, and the transverse direction corresponds to TD.
(5) Tear strength (N/mm) of a film: Each film was cut to 76 mm in width and 63 mm in length, and a 20-mm slit was formed in the vertical direction at the center of the horizontal direction to prepare a trouser-shaped specimen. The tear strength of the specimen was measured using an Elmendorf tear tester (manufacturer: Leading Instruments) equipped with a weight of 200 to 1,600 gf according to the ASTM D1922 standard. An average measured of 10 tests was divided by the film thickness and recorded. The tear strength was measured in the longitudinal direction (MD) and transverse direction (TD) of the film, respectively.

**[Table 3]**

| | | Ex. 1 | Ex. 2 | Ex. 3 | Ex. 4 | Ex. 5 | Ex. 6 |
|---|---|---|---|---|---|---|---|
| Resin | | A | B | C | D | E | F |
| Film processability | | ⊚ | ⊚ | ⊚ | ⊚ | ⊚ | ⊚ |
| Noise (dB) | | 67 | 65 | 65 | 65 | 60 | 62 |
| Haze (%) | | 15 | 15 | 15 | 10 | 18 | 11 |
| Young's modulus (MPa) | MD | 1450 | 1360 | 1380 | 920 | 290 | 330 |
| | TD | 1100 | 1300 | 1330 | 480 | 150 | 180 |
| Tear strength (N/mm) | MD | 12 | 31 | 31 | 42 | 60 | 43 |
| | TD | 15 | 45 | 45 | 37 | 65 | 46 |

**[Table 4]**

| | | Ex. 7 | Ex. 8 | Ex. 9 | Ex. 10 | Ex. 11 | Ex. 12 | Ex. 13 |
|---|---|---|---|---|---|---|---|---|
| Resin | | G | H | I | J | K | L | M |
| Film processability | | ⊚ | ⊚ | ⊚ | ⊚ | ⊚ | ⊚ | ⊚ |
| Noise (dB) | | 65 | 67 | 65 | 65 | 65 | 66 | 66 |
| Haze (%) | | 20 | 20 | 21 | 26 | 28 | 21 | 20 |
| Young's modulus (MPa) | MD | 1410 | 1950 | 220 | 200 | 950 | 645 | 560 |
| | TD | 840 | 1650 | 250 | 200 | 760 | 613 | 440 |
| | MD | 3.2 | 3.6 | 47 | 69 | 27 | 22 | 24 |
| Tear strength (N/mm) | TD | 4.9 | 4.8 | 52 | 80 | 21 | 18 | 27 |

**[Table 5]**

| | | Com. Ex. 1 | Com. Ex. 2 | Com. Ex. 3 | Com. Ex. 4 | Com. Ex. 5 | Com. Ex. 6 | Com. Ex. 7 | Com. Ex. 8 | Com. Ex. 9 |
|---|---|---|---|---|---|---|---|---|---|---|
| Resin | | N | O | P | Q | R | S | T | PLA (4032D) | PLA /PBAT |
| Film processability | | ⊚ | ⊚ | ⊚ | Δ | Δ | × | × | Δ | ⊚ |
| Noise (dB) | | 65 | 65 | 71 | 61 | 72 | - | - | 75 | 65 |
| Haze (%) | | 10 | 3 | 3 | 3 | 35 | - | - | 0.7 | 80 |
| Young's modulus (MPa) | MD | 1150 | 760 | 2550 | 330 | 2780 | - | - | 3500 | 1100 |
| | TD | 610 | 360 | 2380 | 180 | 2560 | - | - | 3800 | 600 |
| Tear strength (N/mm) | MD | 31 | 52 | 6.4 | 80 | 0.5 | - | - | 2.1 | 8.8 |
| | TD | 41 | 53 | 2.7 | 75 | 0.7 | - | - | 2.2 | 4.6 |

Referring to Tables 1 to 5, the polylactic acid resins and polylactic acid resin films prepared in Examples 1 to 13 comprised a predetermined amount or more of polyether polyol a or b and polyurethane polyol repeat units derived from at least one polyol c selected from the group consisting of the polyester-based polyol, polylactone-based polyol, and polycarbonate-based polyol. Thus, the polylactic acid resin had a Tm of 139 to 162°C and an MI of 2 to 43 g/10 minutes, resulting in excellent processability, along with excellent biodegradability, transparency, flexibility, and tear strength.

For example, in the polylactic acid resins and the polylactic acid resin films prepared in Examples 1 to 13, the content of the polyurethane polyol repeat unit, which is a soft segment of the polylactic acid resin, was 10 to 35% by weight, the film processability (bubble stability) was enhanced, the noise generated from the film was 67 dB or less, the haze was 28% or less with transparency, the Young's modulus in the MD and TD directions was 1,950 MPa or less, and the tear strength was 3 N/mm or more, indicating that the processability and optical and mechanical properties of the film were overall enhanced.

In contrast, in the film of Comparative Example 8 made of a conventional polylactic acid resin that did not contain a soft segment comprising a polyurethane polyol repeat unit, the Young's modulus in the length and transverse directions was 3,500 MPa or more, indicating that its flexibility was not sufficient for use as a packaging film. In addition, the tear strength was 2.2 N/mm or less, which was not sufficient, and the bubble was very shaken during the processing of the film, indicating poor processability.

In addition, the resin prepared in Comparative Example 9 was obtained by compounding the conventional polylactic acid resin of Comparative Example 8 and PBAT. The processability and flexibility were slightly improved, whereas the haze was 80% or more, indicating poor transparency.

In addition, in the polylactic acid resins and films prepared in Comparative Examples 4 and 6, the polyurethane polyol repeat unit, which is a soft segment in the polylactic acid resin, exceeded the appropriate content, resulting in a relatively low content of a hard segment, failing to achieve biodegradability. The MI of the polylactic acid resin increased, making the film bubble unstable during processing.

Meanwhile, the polylactic acid resins and films prepared in Comparative Examples 2 to 4, 6, and 7 did not comprise at least one repeat unit selected from the group consisting of the polyester-based polyol repeat unit, polylactone-based polyol repeat unit, and polycarbonate-based polyol repeat unit; thus, their biodegradability did not reach 90%. In particular, in the polylactic acid resins and films prepared in Comparative Examples 6 and 7, the MI of the polylactic acid resin was excessively high or low, whereby it was not possible to process a film. As a result, the haze, noise, Young's modulus, and tear strength were not measurable.

In addition, the polylactic acid resin and film prepared in Comparative Example 1 had a low content of at least one repeat unit selected from the group consisting of the polyester-based polyol repeat unit, polylactone-based polyol repeat unit, and polycarbonate-based polyol repeat unit; thus, its biodegradability did not reach 90%, indicating that it cannot be used as a biodegradable material.

The polylactic acid resin and film prepared in Comparative Example 5 comprised 100% by weight of at least one repeat unit selected from the group consisting of the polyester-based polyol repeat unit, polylactone-based polyol repeat unit, and polycarbonate-based polyol repeat unit, without a polyether polyol; thus, the Young's modulus increased, resulting in poor flexibility, and the tear strength decreased.

## Claims

1. A polylactic acid resin, which comprises a hard segment comprising a polylactic acid repeat unit represented by the following Formula 1; and
a soft segment comprising a polyurethane polyol repeat unit in which a polyether polyol repeat unit represented by the following Formula 2 is linearly connected via a urethane bond with at least one repeat unit selected from the group consisting of a polyester-based polyol repeat unit represented by the following Formula 3, a polylactone-based polyol repeat unit represented by the following Formula 4, and a polycarbonate-based polyol repeat unit represented by the following Formula 5,
wherein the soft segment comprises 0.5% by weight or more of at least one repeat unit selected from the group consisting of the polyester-based polyol repeat unit, the polylactone-based polyol repeat unit, and the polycarbonate-based polyol repeat unit based on the total weight of the polyether polyol repeat unit, the polyester-based polyol repeat unit, the polylactone-based polyol repeat unit, and the polycarbonate-based polyol repeat unit: 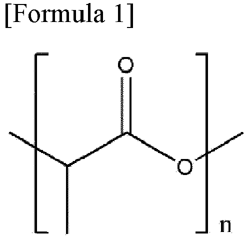 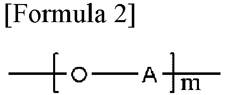 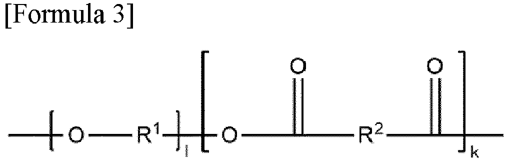 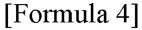 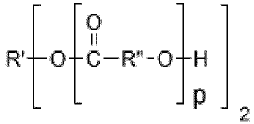 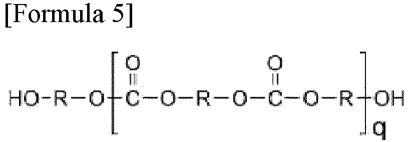
in Formula 1, n is an integer of 700 to 5,000;
in Formula 2, A is an alkylene group having 2 to 4 carbon atoms in the main chain and having 2 to 6 carbon atoms in total, and m is an integer of 10 to 100;
in Formula 3, R¹ is a linear or branched alkylene group having 2 to 5 carbon atoms, R² is a linear or branched alkylene group having 2 to 5 carbon atoms or an arylene group having 6 to 18 carbon atoms, 1 is an integer of 10 to 100, and k is an integer of 10 to 50;
in Formula 4, R' is a linear or branched alkylene group having 2 to 5 carbon atoms, R" is a linear or branched alkylene group having 1 to 5 carbon atoms, and p is an integer of 2 to 20; and
in Formula 5, R is a linear alkylene group having 2 to 5 carbon atoms, and q is an integer of 1 to 25.

2. The polylactic acid resin of claim 1, which comprises 5 to 40% by weight of the soft segment based on the total weight of the polylactic acid resin.

3. The polylactic acid resin of claim 1, wherein the soft segment comprises 25 to 99.5% by weight of the polyether polyol repeat unit and 0.5 to 75% by weight at least one repeat unit selected from the group consisting of the polyester-based polyol repeat unit, the polylactone-based polyol repeat unit, and the polycarbonate-based polyol repeat unit based on the total weight of the polyether polyol repeat unit, the polyester-based polyol repeat unit, the polylactone-based polyol repeat unit, and the polycarbonate-based polyol repeat unit.

4. The polylactic acid resin of claim 1, wherein the polyester-based polyol repeat unit represented by the Formula 3 is represented by the following Formula 3-1 or Formula 3-2: 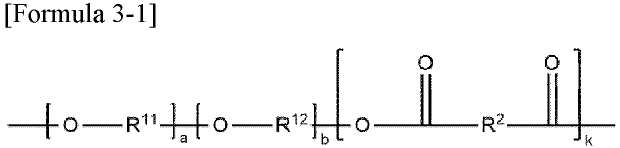
in Formula 3-1, R¹¹ and R¹² are each independently a linear or branched alkylene group having 2 to 5 carbon atoms, provided that R¹¹ and R¹² are different from each other,
R² is a linear or branched alkylene group having 2 to 5 carbon atoms or an arylene group having 6 to 18 carbon atoms,
a and b are each independently an integer of 1 or more, provided that the sum of a and b is 10 to 100, and
k is an integer of 10 to 50; 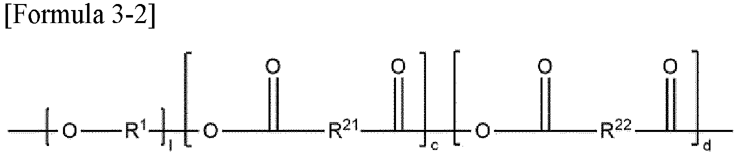
in Formula 3-2, R¹ is a linear or branched alkylene group having 2 to 5 carbon atoms, R²¹ and R²² are each independently a linear or branched alkylene group having 2 to 5 carbon atoms or an arylene group having 6 to 18 carbon atoms, provided that R²¹ and R²² are different from each other, 1 is an integer from 10 to 100, and c and d are each independently an integer of 1 or more, provided that the sum of c and d is 10 to 50.

5. The polylactic acid resin of claim 1, wherein the urethane bond is derived from a linear aliphatic diisocyanate compound.

6. The polylactic acid resin of claim 1, which has a biodegradability of 90% or more according to EN ISO 14855-1:2013.

7. The polylactic acid resin of claim 1, wherein the polylactic acid resin has a content of biomass-derived repeat units of 70% by weight or more.

8. The polylactic acid resin of claim 1, which has a melt flow index of 0.1 to 43 g/10 minutes.

9. A process for preparing a polylactic acid resin, which comprises:
reacting a polyether polyol; at least one selected from the group consisting of a polyester-based polyol, a polylactone-based polyol, and a polycarbonate-based polyol; and a linear aliphatic diisocyanate compound to form a soft segment; and
reacting the soft segment with lactide to connecting a hard segment comprising a polylactic acid repeat unit with the soft segment.

10. The process for preparing a polylactic acid resin of claim 9, which further comprises increasing the viscosity of the polylactic acid resin by reacting a chain extender in an amount of 0.01 to 2% by weight based on the total weight of the polylactic acid resin once the hard segment and the soft segment have been connected.

11. A molded article, which comprises the polylactic acid resin of claim 1.

12. A polylactic acid resin film, which comprises the polylactic acid resin of claim 1.

13. The polylactic acid resin film of claim 12, which has a haze of 40% or less, as measured according to ASTM D1003-97, based on a thickness of 35 to 50 µm.

14. The polylactic acid resin film of claim 12, which has a Young's modulus of 2,000 MPa or less in each of the longitudinal direction and transverse direction of the film, as measured according to ASTM D882, based on a thickness of 35 to 50 µm.

15. The polylactic acid resin film of claim 12, which has a tear strength of 3 N/mm or more in each of the longitudinal direction and transverse direction of the film, as measured according to ASTM D1922, based on a thickness of 35 to 50 µm.
